# EUROPEAN PATENT SPECIFICATION

(11) **EP 1 703 221 B1**
(45) Date of publication and mention of the grant of the patent: **05.08.2009**
(21) Application number: 05011859.5
(22) Date of filing: 01.06.2005
(51) Int. Cl.: F24F 7/08, F24F 11/00

(54) **Ventilating system and method for controlling the same**
Belüftungssystem und Verfahren zu dessen Steuerung
Système de ventilation et procédé de contrôle de celui-ci

(30) Priority: 15.02.2005 KR 2005012316
(43) Date of publication of application: 20.09.2006
(73) Proprietor: LG Electronics, Inc., Seoul (KR)
(72) Inventor: Choi, Ho Seon, Dongjak-gu, Seoul (KR); Lee, Ju Youn, Dongjak-gu, Seoul (KR); Kim, Ho Jung, Bupyeong-gu Incheon (KR); Choi, In Ho, Gyeonggi-do, 430-019 (KR)
(74) Representative: TER MEER - STEINMEISTER & PARTNER GbR

(56) References cited:
- WO-A-00/39506
- WO-A-03/042603
- DE-A1- 4 023 673
- DE-A1- 4 407 276
- DE-A1- 19 854 016
- US-A- 5 226 256

## Description

### BACKGROUND OF THE INVENTION

### Field of the Invention

The present invention relates to ventilating systems, and more particularly, to a ventilating system for introducing outdoor air and discharging room air, and a method for controlling the same.

### Discussion of the Related Art

A ventilating system is provided to a general house or an apartment for ventilating rooms. Such a ventilating system is provided with a duct that forms a moving passage of air. The ventilating system is provided with, in general, an air supply fan and an air discharge fan, and the duct is; in general, provided with an air supply duct and an air discharge duct. In operation, when the air supply fan is driven, outdoor air is supplied to the room through the air supply duct, and when the air discharge fan is driven, the room air is discharged to an outside of the room, thereby ventilating the room.

In the meantime, in case of a new building, there are much Volatile Organic Compounds (VOC), such as formaldehyde, emitted from various construction materials. It is known that such volatile organic compounds cause dermatitis, and cancer. In a case there are much volatile organic compounds in the room, it is required to ventilate the room, quickly.

However, sizes of the air supply, and discharge ducts, and outputs of the air supply fan and the air discharge fan are fixed already, an amount of outdoor air supplyable in a unit time period, and an amount of room air dischargeable to an outside of the room in a unit time period, are limited. Therefore, in a case the room air is polluted heavily, the room can not be ventilated, quickly. In order to solve such a problem, it is required to design the air supply, and the air discharge ducts larger, and provide larger capacity air supply fan, and air discharge fan. However, in this case bulky ventilating system and ducts impedes easy mounting thereof.

WO 00/39506 A describes a system for controlling network ventilation of the building, wherein the control is carried out by adjustment of passive ventilation devices like windows, wherein each window is connected to a window controller, which is connected to a central control unit. A central control unit receives a plurality of physical parameters of the ventilation zone, like indoor and outdoor temperature and additional outdoor climate variables. By opening or closing the windows based on the measures physical values a passive ventilation is achieved.

### SUMMARY OF THE INVENTION

Accordingly, the present invention is directed to a ventilating system, and a method for controlling the same that substantially obviates one or more problems due to limitations and disadvantages of the related art.

An object of the present invention is to provide a ventilating system, and a method for controlling the same, which can ventilate a room when the room is polluted heavily.

Another object of the present invention is to provide a ventilating system for introducing outdoor air and discharging room air, and a method for controlling the same, which can ventilate a room taking a content of volatile organic compounds of room air into account.

A further object of the present invention is to provide a ventilating system, and a method for controlling the same, which can improve a ventilating capability of the ventilating system without providing larger ventilating system and ducts.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

The objects are solved by the features of the independent claims. A ventilating system includes a duct for making a room and an outside of the room in communication, a ventilator connected to the duct for discharging room air to an outside of the room, and supplying outdoor air to the room through the duct, a window controller provided to each window for opening/closing the window individually, and a controller for controlling the ventilator and the window controller for ventilating the room.

The ventilating system may further include a VOC sensor for measuring a content of volatile organic compounds of the room air. The ventilating system may further include sensors for measuring conditions of outdoor air and room air. The sensors include a room temperature sensor for measuring a temperature of the room air, a room humidity sensor for measuring humidity of the room air, an outdoor temperature sensor for measuring a temperature of the outdoor air, and an outdoor humidity sensor for measuring humidity of the outdoor air.

The window controller includes a control unit for opening/closing the window, and a driving unit connected to the control unit for generating a driving force.

The window controller makes the window to slide sideways to open/close the window. In this case, the control unit includes a housing connected to the window, the housing having a helical hole, and an elongated screw coupled to the driving unit and placed in the helical hole for moving the window connected to the housing as the screw is rotated by the driving unit. The driving unit may include a driving motor coupled to the screw with a shaft, or a gear box connected to one end of the screw, and a driving motor coupled to the gear box with a shaft.

The window controller pushes/pulls the window forward/backward to open/close the window. In this case, the control unit includes a driven gear connected to the window, and a driving gear connected to the driving unit, and engaged with the driven gear, for being rotated by the driving unit to rotate the driven gear, for opening/closing the window. The driven gear is coupled to the rotating shaft of the window with a shaft, and the driving unit includes a driving motor coupled to the driving gear with a shaft.

The controller determines a ventilating method and a ventilating rate taking the content of volatile organic compounds of the room air, and controls the ventilator and the window controller, accordingly. The controller closes the window when the room air is polluted lower than a preset highest reference value.

The controller determines the ventilating method and the ventilating rate taking the outdoor temperature into account additionally when the room air is polluted higher than a preset highest reference value, and controls the ventilator and the window controller, accordingly. The controller closes the window, and puts the ventilator into operation, for ventilating the room, if the outdoor temperature is outside of a present range.

The controller determines the ventilating method and the ventilating rate taking a temperature difference between the room and outside of the room if the outdoor temperature is within a preset range, and controls the ventilator and the window controller. The controller opens the window to ventilate the room if the temperature difference between the room and outside of the room is within a preset range. The controller closes the window and puts the ventilator into operation, for ventilating the room, if the temperature difference between the room and the outside of the room is outside of the preset range.

In the meantime, in another aspect of the present invention, a method for controlling a ventilating system includes the steps of measuring conditions of room air and outdoor air, determining a ventilating method and a ventilating rate according to the measured conditions, and ventilating the room by opening/closing at least one window automatically, and putting a ventilator into operation according to a result of determination.

The step of determining a ventilating method and a ventilating rate further includes the step of determining a degree of pollution of the room air being within a preset range. The degree of pollution of the room air is dependent on a content of volatile organic compounds of the room air.

The step of ventilating the room includes the step of closing the window if the degree of pollution of the room air is within a preset range. The step of ventilating the room includes the step of closing the window and stopping the ventilator if the degree of pollution of the room air is lower than a lowest reference value. The step of ventilating the room includes the step of closing the window and operating the ventilator at a low rate if the degree of pollution of the room air is higher than a lowest reference value and lower than a highest reference value.

The step of determining a ventilating method and a ventilating rate further includes the step of determining the outdoor temperature of being within a preset range if the degree of pollution of the room air is higher than a preset range. The step of ventilating the room includes the step of closing the window and putting the ventilator into operation if the outdoor temperature is outside of a preset range.

The step of determining a ventilating method and a ventilating rate further includes the step of determining the temperature difference between the room and the outside of the room being within the preset range if the outdoor temperature is within the preset range. The step of ventilating the room further includes the step of opening the window and stopping the ventilator if the temperature difference between the room and outside of the room is within a preset range.

The step of determining a ventilating method and a ventilating rate further includes the step of determining outdoor relative humidity of being within a preset range if the temperature difference between the room and the outside of the room is within a preset range. The step of ventilating the room includes the step of opening the window to the maximum if the outdoor relative humidity is within a preset range. The step of ventilating the room further includes the step of opening the window to the minimum if the outdoor relative humidity is outside of the preset range.

The step of ventilating the room further includes the step of closing the window and putting the ventilator into operation if the temperature difference between the room and the outside of the room is outside of the preset range.

The step of determining a ventilating method and a ventilating rate further includes the step of determining room relative humidity of being within a preset range if the temperature difference between the room and the outside of the room is outside of the preset range. The step of ventilating the room further includes the step of closing the window and operating the ventilator at a maximum rate if the room relative humidity is within the preset range. The step of ventilating the room further includes the step of closing the window and operating the ventilator at a minimum rate if the room relative humidity is outside of the preset range.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings;

FIG. 1 illustrates a plan view of a ventilating system in accordance with a preferred embodiment of the present invention provided to a building;

FIG. 2 illustrates a block diagram of the ventilating system in FIG. 1;

FIG. 3 illustrates a window controller of the ventilating system in FIG. 1 in accordance with a first preferred embodiment of the present invention, schematically;

FIG. 4 illustrates a window controller of the ventilating system in FIG. 1 in accordance with a second preferred embodiment of the present invention, schematically; and

FIG. 5 illustrates a flow chart showing the steps of a method for controlling a ventilating system of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

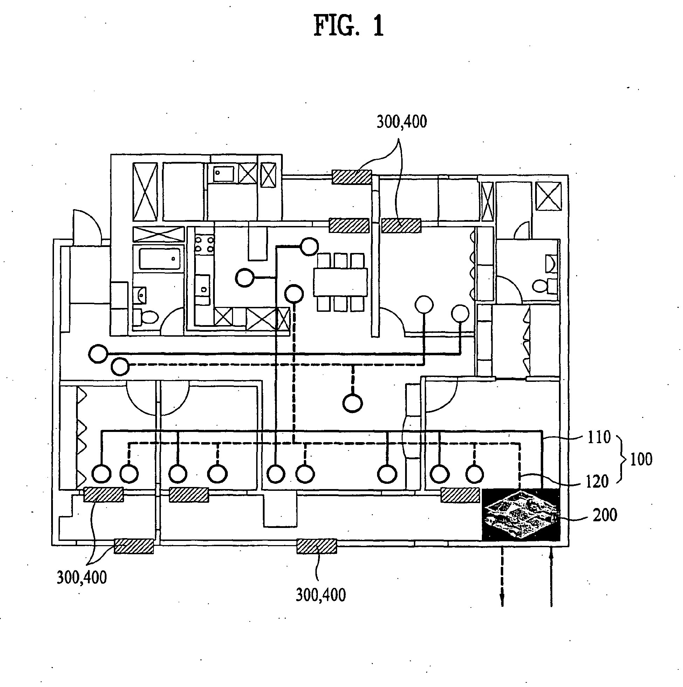

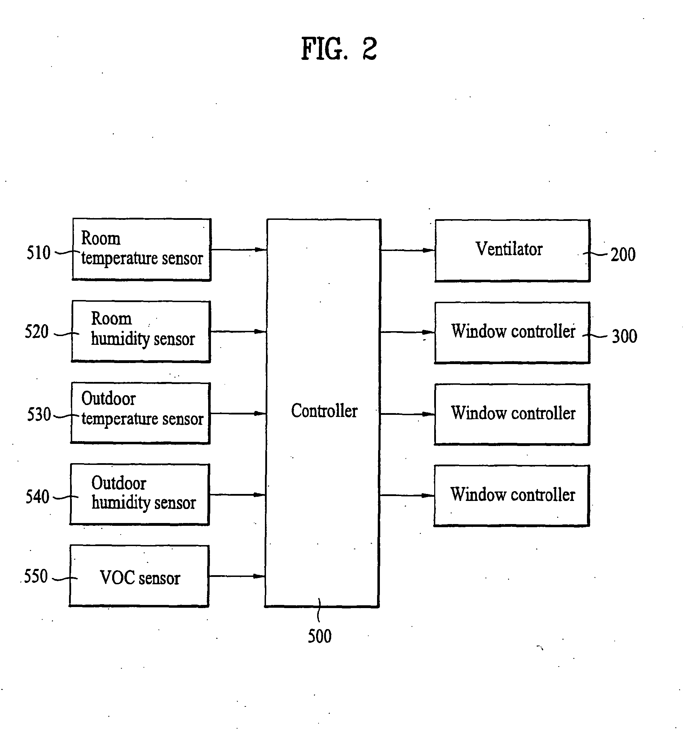

Referring to FIGS. 1 and 2, the ventilating system of the present invention includes a duct 100 making a room and an outside of the room in communication, a ventilator 200 connected to the duct 100, for discharging room air to an outside of the room through the duct 100, and supplying outdoor air to the room, window controllers 300, and 400 mounted to the windows W1, and W2 for opening/closing the windows W1, and W2 respectively, and a controller 500 for controlling the ventilator 200 and the window controllers 300, and 400, for ventilating the room.

Referring to FIG. 1, the duct 100 includes an air supply duct 110 for supplying outdoor air to rooms, and a discharge duct 120 for discharging room air to an outside of the rooms. At the end of the air supply duct 110 connected to the room, there is an air supply diffuser provided thereto, and at the end of the air discharge duct 120, there is an air discharge diffuser provided thereto. For reference, the air supply diffusers and the air discharge diffusers are marked with circles at ends of the air supply duct and the air discharge duct 120.

The ventilator is, for an example, installed at a balcony, and has an air supply fan (not shown) and an air discharge fan (not shown). The air supply fan is in communication with the air supply duct 110, for supplying outdoor air to the room through the air supply duct 110. The air discharge fan is in communication with the air discharge duct 120, and discharges room air to an outside of the room through the air discharge duct 120.

The ventilator 200 may further include a preheat exchanger (not shown). The preheat exchanger is provided to, for an example, an inside of a case to the ventilator 200, for making the outside air being supplied to the room and the room air being discharged to an outside of the room to cross and heat exchange, indirectly. Accordingly, thermal energy of the room air discharge to an outside of the room is recovered by the outdoor air supplied to the room through the preheat exchanger, to improve a thermal efficiency of the ventilating system of the present invention, accordingly.

The ventilator 200 may further includes a filter (not shown). The filter is mounted on, for an example, the preheat exchanger, for filtering outdoor air and room air introduced into the preheat exchanger. Therefore, the ventilating system of the present invention always supplies filtered clean air only, according to which the room maintains a comfortable state.

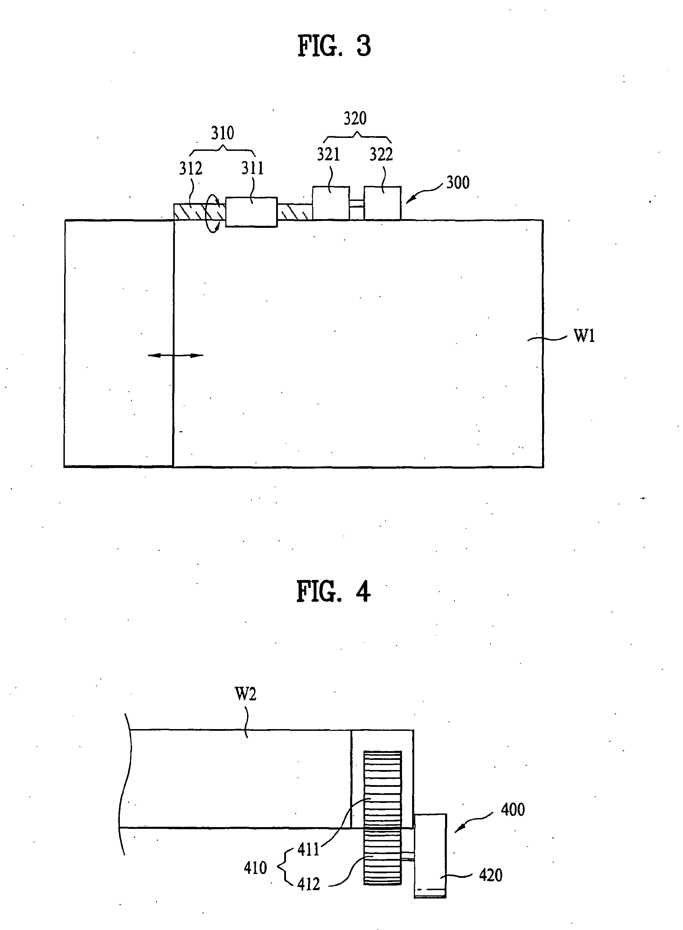

In the meantime, the window controllers 300, and 400 may be provided to some or all of the windows. The window controller 300 or 400 of the present invention is applicable both to a window W1 for opening/closing the window by sliding the window in a left/right direction, and a window W2 for opening/closing the window by pushing/pulling in a forward/backward direction. Such window controllers 300, and 400 will be described with reference to FIGS. 3 and 4, in more detail.

FIG. 3 illustrates a window control device of the ventilating system in FIG. 1 in accordance with a first preferred embodiment of the present invention, schematically.

Referring to FIG 3, the window controller 300 can open/close a window W1 by sliding the window W1 in a left/right directions, and includes a control unit 310 for opening/closing the window W1, and a driving unit 320 for driving the control unit 310.

The control unit 310 includes, for an example, a housing fixedly secured to a frame of a window W1 to be closed/opened by sliding the window W1 in a left/right direction, and a screw 312 connected to the driving unit 320 and engaged with the housing 311. In more detail, the housing has a helical hole in an inside surface thereof, passed through, for an example, the housing 311. The screw 312 has one end connected to a shaft of the driving unit 320, and the other end placed in the helical hole to pass through the housing 311. Therefore, when the screw 312 is rotated by the driving unit 320, rotation of the screw 312 is converted into a linear motion of the housing 311 by the helical hole, to move the window W1 together with the housing 311 in a left/right direction as the housing slides in the left/right direction.

The driving unit 320 that drives the control unit 310 includes a gear box 321 of a predetermined gear ratio, having the screw 312 coupled thereto with a shaft, and a driving motor 322 coupled to the gear box 321 with a shaft. The gear box 321 has an appropriate gear ratio taking a moving speed of the window W1 into account. The control unit 310 is not limited to this. For an example, the control unit 310 may only includes a driving motor coupled to one end of the screw 312 with a shaft.

In the meantime, the window controller 300 applicable to a window W1 to be opened/closed as the window slides in a left/right direction is not limited to above example. As another example, the window controller 300 may include a belt, a sprocket, and a motor. In more detail, the sprocket includes a driving sprocket mounted on the motor, and a driven sprocket arranged a predetermined space away from the driving sprocket. The belt connects the driving sprocket to the driven sprocket, and the window W1 frame is connected to the belt. Accordingly, if the motor is driven, the belt rotates together with the driving sprocket, and, according to this, the window W1 connected to the belt moves. As another example, the window controller 300 may include a pinion rotated by a motor, and rack fixed secured to the window W1 and engaged with the rack.

FIG 4 illustrates a window controller 400 of the ventilating system in FIG. 1 in accordance with a second preferred embodiment of the present invention, schematically.

Referring to FIG. 4, the window controller 400 is applicable to a window W2 which can be opened/closed by pushing/pulling the window in forward/backward, and includes a control unit 410 mounted on the window W2, and a driving unit 420 connected to the control unit 410 for generating a driving force.

The control unit 410 is, for an example, includes a driven gear 411 mounted on the window W2, and a driving gear 412 coupled to the driving unit with a shaft and engaged with the driven gear. The driven gear 411 is coupled to a rotating shaft of the window W2 with a shaft, for opening/closing the window W2 while rotating with the driving gear 412 when the driving gear 412 is rotated by the driving unit 420. A gear ratio of the driven gear 411 to the driving gear is fixed taking an open/close speed of the window W2, and a rotating torque of the window W2. The window controller 400, that can open/close the window, is not limited to above. As another example, the window controller 400 may include a hydraulic cylinder.

Moreover, though not shown, the window controller 300, or 400 may further include a safety device (not shown) which senses a portion of a human body, or a foreign matter get in the window W1, or W2, and stops operation of the driving unit 320, or for preventing the user suffering from wound, and the window controller 300, or 400 from breaking, effectively.

The controller 500 controls the ventilator 200 and the window controller 300, and 400 according to conditions of room air and outdoor air. For this, the ventilating system of the present invention further includes a plurality of sensors for measuring conditions of the room air and the outdoor air as shown in FIG. 2.

In more detail, the sensors are a VOC sensor 550 for measuring a content of the volatile organic compounds in the room air, a room temperature senor 510 for measuring a room temperature, a room humidity sensor 520 for measuring a relative humidity of the room, an outdoor temperature sensor 530 for measuring an outdoor temperature, and an outdoor relative humidity sensor 540 for measuring an outdoor relative humidity. The sensors are electrically connected to, and makes communication with the controller. The "electrically connected to, and makes communication with" means both wire/wireless communication.

The sensors may be, for an example, in the case of the ventilator 200. In more detail, the outdoor temperature sensor 530 and the outdoor humidity sensor 540 are mounted to a first inlet (not shown) through which the ventilator 200 draws the outdoor air, the room temperature sensor 510, the room humidity sensor 520, and the VOC sensor 550 may be mounted to a second inlet (not shown) through which the ventilator 200 draws the room air. It is preferable that sensors are mounted such that the conditions of the room, and outdoor air are measured before the room, and outdoor air pass through the preheat exchanger. In the meantime, if the sensors are provided to an inside of the case of the ventilator 200, lengths of electric wire or communication cable can be made shorter, which enables easy installation of the ventilating system.

Opposite to this, the sensors may be mounted to the diffusers. For an example, the outdoor air sensor 530 and the outdoor humidity sensor 540 may be mounted to the air supply diffuser, and the room temperature sensor 510, the room humidity sensor 520, and the VOC sensor 550 may be mounted to the air discharge diffuser.

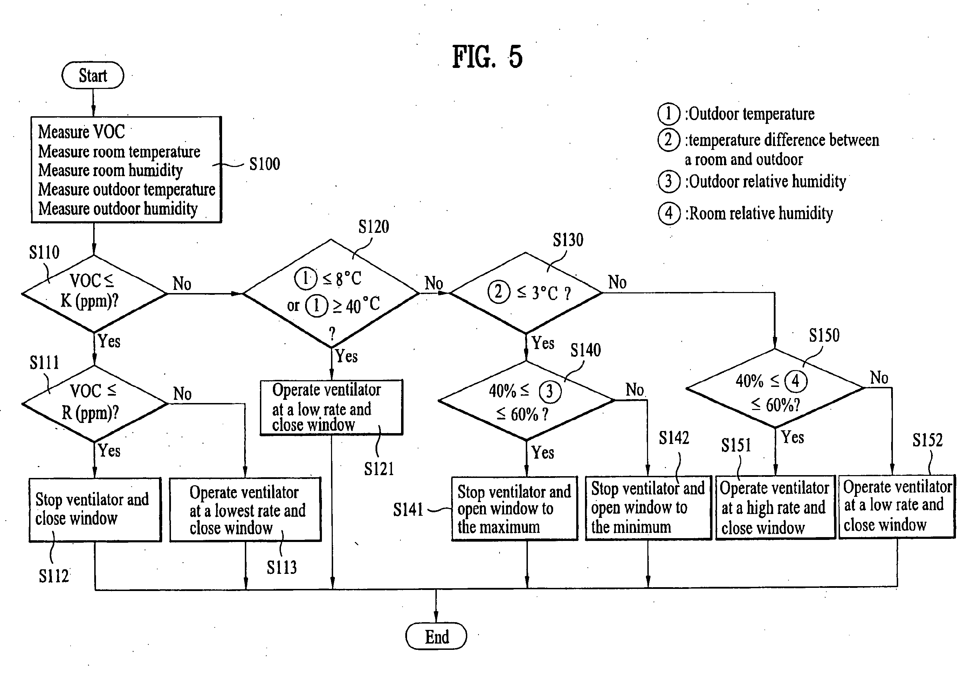

Referring to FIG. 5, after measuring conditions of room air and outdoor air with above sensors, i.e., the temperature and the humidity of the room, and outdoor air, and the content of the volatile organic compounds of the room air (S100), the foregoing ventilating system fixes a ventilating method and a ventilating rate, or puts the ventilator 200 into operation according to measured conditions, and opens/closes the windows W1, and W2 automatically according to the fixed result. In this instance, the controller 500 operates the ventilator 200 and the window controllers 300, and 400, selectively, or at the same time.

When the ventilator 200 is operated, the room air is discharged to an outside of the room through the air discharge duct 120 and the preheat exchanger, and the outdoor air is supplied to the room through the preheat exchanger and the air supply duct 110, thereby ventilating the room forcibly by using the ventilator 200. Opposite to this, if the window controller 300, or 400 opens the window W1, or W2, the outdoor air is supplied to the room and the room air is discharged to an outside of the room by natural convection, thereby ventilating the room, naturally. In this instance, by controlling degrees of opening of the window W1, or W2, the ventilating rate can be adjusted, i.e., if the degrees of opening of the window W1 or W2 is great, the room can be ventilated, quickly. A method for controlling a ventilating system in accordance with the present invention will be described in more detail with reference to FIG. 5.

The controller 500 fixes a ventilating method and a ventilating rate according to degrees of pollution of the room air, i.e., according to a content of the volatile organic compounds of the room air. For this, the controller determines whether the content of the volatile organic compounds of the room air is higher than a highest reference value (K ppm) with reference to the value measured at the VOC sensor 550 (S110). If the content of the volatile organic compounds of the room air is lower than the highest reference value (K ppm), then, the controller 500 determines whether the content of the volatile organic compounds of the room air is higher than a lowest reference value (R ppm) (S 112).

If the content of the volatile organic compounds of the room air is lower than the lowest reference value (R ppm), i.e., if the degrees of pollution of the room air is low, no ventilation is required. Accordingly, the controller 500 closes the window W1, or W2, and stops the ventilator, for ventilating the room no more (112). However, if the room air is polluted more or less, i.e., the content of the volatile organic compounds of the room air is within a predetermined range, i.e., higher than Rppm and lower than Kppm, it is required to ventilate the room slowly. Accordingly, the controller 500 closes the window W1 or W2, and operates the ventilator 200 at a low rate, for ventilating the room, slowly.

As a result of measurement of the degree of pollution of the room air, if the degrees of pollution of the room air is high, i.e., if the content of the volatile organic compounds of the room air is higher than the highest reference value Kppm, the controller 500 takes the outdoor air into account additionally in determining the ventilating method and the ventilating rate. For this, controller 500 determines if the outdoor air is within a preset range, for an example, higher than 8°C and lower than 40°C (S120). Herein, the 8°C suggested as a lowest reference temperature and the 40°C suggested as a highest reference temperature are a temperature people feel chilly, and a temperature people feels very warm, respectively. The lowest and highest reference temperatures may be varied taking environments of the regions where the ventilating system is used, or preference of residence into account.

When the outdoor air temperature falls outside of a preset range, i.e., when the outdoor air temperature condition is very bad as the outdoor temperature is lower than 8°C, or higher than 40°C, the controller 500 does not open the window W1, and W2. This is because the very low or high temperature outdoor air can be introduced into the room quickly if the window W1, or W2 is opened, to deteriorate the room environment. Therefore, in this case, the controller 500 operates the ventilator 200 at a low rate in a state the window W1, or W2 is closed, to ventilate the room, slowly (S121). Then, the outdoor air having heat exchanged at the preheat exchanger is introduced into the room, to enable ventilation of the room while preventing outdoor air of bad temperature condition from being introduced into the room, effectively.

When the outdoor air is within a preset range, i.e., an outdoor temperature condition is appropriate, the controller 500 determines a ventilating method and a ventilating rate taking a temperature difference between the room and outside of the room into account, additionally. For this, the controller 500 determines whether the temperature difference between the room and outside of the room is below, for an example, 3°C or not (S130).

If the temperature difference between the room and outside of the room is below 3°C, the room temperature condition does not become poor substantially even if outdoor air is introduced into the room, directly. Therefore, the controller 500 opens the window W1 or W2 for ventilating polluted room, quickly. In this instance, as an adequate rate of ventilation is available through the opened windows W1 and W2, the ventilator 200 is not operated. However, if required, the window W1 and W2 can be opened, and the ventilator 200 can be put into operation as well.

If the temperature difference between the room and the outside of the room is small, the controller 500 determines the ventilating rate, taking a relative humidity of the outdoor air introduced into the room through the window W1 and W2 into account, additionally. For this, the controller 500 determines whether the relative humidity of the outdoor air is within a preset range, for an example, higher than 40% and lower than 60% (S140).

If the relative humidity of the outdoor air is within a preset range, the room environment does not change suddenly even if a large amount of outdoor air is introduced into the room at a time. Accordingly, in this case, the controller 500 opens the window W1, and W2 to the highest, and, as described before, the ventilator 200 is not put into operation (S 141). However, if the relative humidity of the outdoor air is outside of the preset range, the room environment is likely to become poor if a large amount of the outdoor air is introduced into the room at a time. Accordingly, in this case, the controller 500 opens the window W1, and W2 to the lowest, and, as described before, the ventilator 200 is not put into operation (S142).

In the meantime, if the temperature difference between the room and outside of the room is outside of the preset range, for an example, exceeds by 3°C, the room environment can be changed suddenly, if the window W1, and W2 is opened to introduce the outdoor air into the room, directly. Therefore, in this case, the controller 500 determines the ventilating rate of the ventilator 200 taking the relative humidity of the room air into account additionally in a state the windows W1 and W2 are closed. For this, the controller 500 determines whether the relative humidity of the room air is within a preset range, for an example, higher than 40% and lower than 60% (S 150).

If the relative humidity of the room air is within a preset range, implying that the room environment is comfortable in view of humidity, a large amount of room air may be supplied. Accordingly, in this case, the controller 500 operated the ventilator 200 at a highest rate in a state the windows W1, and W2 are closed, to ventilate the room, quickly (S151). However, if the relative humidity of the room air is outside of the preset range, implying that the room environment is not comfortable even in view of humidity, it is preferable that the outdoor air is supplied at a lowest rate as far as possible. Therefore, in this case, the controller 500 operates the ventilator 200 at the lowest rate in a state the windows W1, and W2 are closed, to ventilate the room, slowly (S 152). In the meantime, if required in the step 150, the controller 500 may determine with reference to the relative humidity of the outdoor air like the step 140 instead of the relative humidity of the room air.

As has been described, the present invention permits to ventilate a room with a ventilator forcibly, or with a window controller naturally by natural convection. According to this, the room air can be ventilated suitable to conditions of outdoor air and room air.
Moreover, when the room is polluted heavily, the room can be ventilated, quickly.

Moreover, the ventilating system of the present invention can ventilate room with reference to a content of volatile organic compounds of the room air. Accordingly, harm to the resident caused by the volatile organic compounds can be prevented in advance.

Furthermore, a ventilating capability of the ventilating system can be improved without providing larger ventilator or duct. Accordingly, the ventilator may be installed at a balcony, or the like easily, and the duct can be installed within a ceiling easily.

It will be apparent to those skilled in the art that various modifications and variations can be made in the present invention without departing from the scope of the inventions. Thus, it is intended that the present invention covers the modifications and variations of this invention provided they come within the scope of the appended claims.

## Claims

1. A ventilating system comprising:
a ventilator (200);
a window controller (300, 400) provided to each window (W1, W2) for opening/closing the window (W1, W2) individually; and
a controller (500) for controlling the ventilator (200) and the window controller (300, 400) for ventilating the room,
**characterized by**
a duct (100) for making a room and an outside of the room in communication, wherein the ventilator (200) is connected to the duct (100) for discharging room air to an outside of the room, and supplying outdoor air to the room through the duct (100); wherein the controller (500) is adapted to determine whether an air pollution degree of the room is higher than a preset highest reference value; and an outdoor temperature is within a preset range; and a temperature difference between a room and the outdoor is within a preset range,
wherein the controller (500) is further adapted to control the ventilator (200) and the window controller (300, 400) according to the result of determination for the air pollution degree, the outdoor temperature, and the temperature difference.

2. The ventilating system as claimed in claim 1, further comprising a VOC sensor (550) for measuring a content of volatile organic compounds of the room air.

3. The ventilating system as claimed in claim 1, further comprising sensors (510. 520, 530, 540) for measuring conditions of outdoor air and room air.

4. The ventilating system as claimed in claim 3, wherein the sensors include:
a room temperature sensor (510) for measuring a temperature of the room air,
a room humidity sensor (520) for measuring humidity of the room air,
an outdoor temperature sensor (530) for measuring a temperature of the outdoor air, and
an outdoor humidity sensor (540) for measuring humidity of the outdoor air.

5. The ventilating system as claimed in claim 1, wherein the window controller (300, 400) is adapted to make the window (W1, W2) to slide sideways to open/close the window.

6. The ventilating system as claimed in claim 1, wherein the window controller (300, 400) is adapted to push/pull the window (W1, W2) forward/backward to open/close the window.

7. The ventilating system as claimed in claim 1, wherein the window controller (300, 400) includes:
a control unit (310, 410) for opening/closing the window, and
a driving unit (320) connected to the control unit (310) for generating a driving force.

8. The ventilating system as claimed in claim 7, wherein the control unit (310) includes:
a housing (311) connected to the window (W1, W2), the housing (311) having a helical hole, and
an elongated screw (312) coupled to the driving unit (320) and placed in the helical hole for moving the window (W1, W2) connected to the housing (311) as the screw (312) is rotated by the driving unit (320).

9. The ventilating system as claimed in claim 8, wherein the driving unit (320) includes a driving motor (322) coupled to the screw (312) with a shaft.

10. The ventilating system as claimed in claim 8, wherein the driving unit (320) includes:
a gear box (321) connected to one end of the screw (312), and
a driving motor (322) coupled to the gear box (321) with a shaft.

11. The ventilating system as claimed in claim 7, wherein the control unit (410) includes:
a driven gear (411) connected to the window (W1, W2), and
a driving gear (412) connected to the driving unit (410), and engaged with the driven gear (411), for being rotated by the driving unit (410)) to rotate the driven gear (411), for opening/closing the window.

12. The ventilating system as claimed in claim 11, wherein the driven gear (411) is coupled to the rotating shaft of the window with a shaft.

13. The ventilating system as claimed in claim 11, wherein the driving unit (410) includes a driving motor coupled to the driving gear with a shaft.

14. The ventilating system as claimed in claim 1, wherein the controller is adapted to determine a ventilating method and a ventilating rate taking the content of volatile organic compounds of the room air, and to control the ventilator (200) and the window controller (300, 400), accordingly.

15. The ventilating system as claimed in claim 14, wherein the controller (500) is adapted to close the window (W1, W2) when the room air is polluted lower than a preset highest reference value.

16. The ventilating system as claimed in claim 1, wherein the controller (500) is adapted to close the window, and to put the ventilator (200) into operation, for ventilating the room, if the outdoor temperature is outside of a present range.

17. The ventilating system as claimed in claim 1, wherein the controller (500) is adapted to determine the ventilating method and the ventilating rate taking a temperature difference between the room and outside of the room if the outdoor temperature is within a preset range, and to control the ventilator (200) and the window controller (300, 400).

18. The ventilating system as claimed in claim 1 or 17, wherein the controller (500) is adapted to open the window to ventilate the room if the temperature difference between the room and outside of the room is within a preset range.

19. The ventilating system as claimed in claim 17, wherein the controller (500) is adapted to close the window and to put the ventilator (200) into operation, for ventilating the room, if the temperature difference between the room and the outside of the room is outside of the preset range.

20. A method for controlling a ventilating system comprising the steps of:
measuring (S100) conditions of room air and outdoor air;
**characterized by**
determining (S110, S111) whether the air pollution degree of the room is higher than a preset highest reference value; and an outdoor temperature is within a preset range (S120); a temperature difference (S130) between a room and the outdoor is within a preset range;
determining a ventilating method and a ventilating rate according to the determined air conditions; and
ventilating the room by opening/closing (S112, S113, S141, S142, S151, S 152) at least one window (W1, W2) automatically, and putting (S113, S151, S152) a ventilator (200) into operation according to a result of determination.

21. The method as claimed in claim 20, wherein the degree of pollution of the room air is dependent on a content of volatile organic compounds of the room air.

22. The method as claimed in claim 20, wherein the step of ventilating the room includes the step (S113) of closing the window if the degree of pollution of the room air is within a preset range.

23. The method as claimed in claim 20, wherein the step of ventilating the room includes the step (S112) of closing the window and stopping the ventilator (200) if the degree of pollution of the room air is lower than a lowest reference value.

24. The method as claimed in claim 20, wherein the step of ventilating the room includes the step of closing the window and operating the ventilator at a low rate if the degree of pollution of the room air is higher than a lowest reference value and lower than a highest reference value.

25. The method as claimed in claim 20, wherein the step of determining a ventilating method and a ventilating rate further includes the step (S120) of determining the outdoor temperature of being within a preset range if the degree of pollution of the room air is higher than a preset range.

26. The method as claimed in claim 20, wherein the step of ventilating the room includes the step (S121) of closing the window and putting the ventilator into operation if the outdoor temperature is outside of a preset range.

27. The method as claimed in claim 26, wherein the step of determining a ventilating method and a ventilating rate further includes the step (S130) of determining the temperature difference between the room and the outside of the room being within the preset range if the outdoor temperature is within the preset range.

28. The method as claimed in claim 27, wherein the step of ventilating the room further includes the step (S141, S142) of opening the window and stopping the ventilator if the temperature difference between the room and outside of the room is within a preset range.

29. The method as claimed in claim 27, wherein the step of determining a ventilating method and a ventilating rate further includes the step (S140) of determining outdoor relative humidity of being within a preset range if the temperature difference between the room and the outside of the room is within a preset range.

30. The method as claimed in claim 29, wherein the step of ventilating the room includes the step (S141) of opening the window to the maximum if the outdoor relative humidity is within a preset range.

31. The method as claimed in claim 29, wherein the step of ventilating the room further includes the step (S142) of opening the window to the minimum if the outdoor relative humidity is outside of the preset range.

32. The method as claimed in claim 29, wherein the step of ventilating the room further includes the step (S151, S152) of closing the window and putting the ventilator into operation if the temperature difference between the room and the outside of the room is outside of the preset range.

33. The method as claimed in claim 32, wherein the step of determining a ventilating method and a ventilating rate further includes the step (S150) of determining room relative humidity of being within a preset range if the temperature difference between the room and the outside of the room is outside of the preset range.

34. The method as claimed in claim 33, wherein the step of ventilating the room further includes the step (S151) of closing the window and operating the ventilator (200) at a maximum rate if the room relative humidity is within the preset range.

35. The method as claimed in claim 33, wherein the step of ventilating the room further includes the step (S152) of closing the window and operating the ventilator at a minimum rate if the room relative humidity is outside of the preset range.

## Patentansprüche

1. Belüftungssystem, das umfasst:
einen Ventilator (200);
eine Fenstersteuereinheit (300, 400), die an jedem Fenster (W1, W2) vorgesehen ist, um das Fenster (W1, W2) einzeln zu öffnen/zu schließen; und
eine Steuereinheit (500), um den Ventilator (200) und die Fenstersteuereinheit (300, 400) zu steuern, um den Raum zu belüften,
**gekennzeichnet durch**
eine Rohrleitung (100), um einen Raum und eine äußere Umgebung des Raums miteinander zu verbinden, wobei der Ventilator (200) mit der Rohrleitung (100) verbunden ist, um **durch** die Rohrleitung (100) Raumluft in eine äußere Umgebung des Raums abzuführen und dem Raum Außenluft zuzuführen;
wobei die Steuereinheit (500) dazu ausgelegt ist zu bestimmen, ob
ein Luftverschmutzungsgrad des Raums höher als ein im Voraus festgelegter höchster Referenzwert ist;
eine Außentemperatur innerhalb eines im Voraus festgelegten Bereichs liegt; und
eine Temperaturdifferenz zwischen einem Raum und der äußeren Umgebung innerhalb eines im Voraus festgelegten Bereichs liegt;
wobei die Steuereinheit (500) ferner dazu ausgelegt ist, den Ventilator (200) und die Fenstersteuereinheit (300, 400) in Übereinstimmung mit dem Bestimmungsergebnis für den Luftverschmutzungsgrad, die Außentemperatur und die Temperaturdifferenz zu steuern.

2. Belüftungssystem nach Anspruch 1, das ferner einen VOC-Sensor (550) umfasst, um einen Gehalt an flüchtigen organischen Verbindungen der Raumluft zu messen.

3. Belüftungssystem nach Anspruch 1, das ferner Sensoren (510, 520, 530, 540) umfasst, um Zustände von Außenluft und von Raumluft zu messen.

4. Belüftungssystem nach Anspruch 3, wobei die Sensoren umfassen:
einen Raumtemperatursensor (510), um eine Temperatur der Raumluft zu messen,
einen Raumfeuchtigkeitssensor (520), um die Feuchtigkeit der Raumluft zu messen,
einen Außentemperatursensor (530), um eine Temperatur der Außenluft zu messen und
einen Außenfeuchtigkeitssensor (540), um Feuchtigkeit der Außenluft zu messen.

5. Belüftungssystem nach Anspruch 1, wobei die Fenstersteuereinheit (300, 400) dazu ausgelegt ist, das Fenster (W1, W2) seitwärts gleiten zu lassen, um das Fenster zu öffnen/zu schließen.

6. Belüftungssystem nach Anspruch 1, wobei die Fenstersteuereinheit (300, 400) dazu ausgelegt ist, das Fenster (W1, W2) vorwärts/rückwärts zu schieben/zu ziehen, um das Fenster zu öffnen/zu schließen.

7. Belüftungssystem nach Anspruch 1, wobei die Fenstersteuereinheit (300, 400) umfasst:
eine Steuereinheit (310, 410), um das Fenster zu öffnen/zu schließen, und
eine Antriebseinheit (320), die mit der Steuereinheit (310) verbunden ist, um eine Antriebskraft zu erzeugen.

8. Belüftungssystem nach Anspruch 7, wobei die Steuereinheit (310) umfasst:
ein Gehäuse (311), das mit dem Fenster (W1, W2) verbunden ist, wobei das Gehäuse (311) ein schraubenlinienförmiges Loch besitzt, und
eine lang gestreckte Schraube (312), die mit der Antriebseinheit (320) gekoppelt ist und in dem schraubenlinienförmigen Loch angeordnet ist, um das mit dem Gehäuse (311) verbundene Fenster (W1, W2) zu bewegen, wenn die Schraube (312) durch die Antriebseinheit (320) gedreht wird.

9. Belüftungssystem nach Anspruch 8, wobei die Antriebseinheit (320) einen mit der Schraube (312) mittels einer Welle gekoppelten Antriebsmotor (322) umfasst.

10. Belüftungssystem nach Anspruch 8, wobei die Antriebseinheit (320) umfasst:
ein Getriebegehäuse (321), das mit einem Ende der Schraube (312) verbunden ist, und
einen Antriebsmotor (322), der mit dem Getriebegehäuse (321) mittels einer Welle gekoppelt ist.

11. Belüftungssystem nach Anspruch 7, wobei die Steuereinheit (410) umfasst:
ein angetriebenes Zahnrad (411), das mit dem Fenster (W1, W2) verbunden ist, und
ein Antriebszahnrad (412), das mit der Antriebseinheit (410) verbunden ist und mit dem angetriebenen Zahnrad (411) in Eingriff ist, um durch die Antriebseinheit (410) gedreht zu werden, um das angetriebene Zahnrad (411) zu drehen, um das Fenster zu öffnen/zu schließen.

12. Belüftungssystem nach Anspruch 11, wobei das angetriebene Zahnrad (411) mit der Drehwelle des Fensters mittels einer Welle gekoppelt ist.

13. Belüftungssystem nach Anspruch 11, wobei die Antriebseinheit (410) einen mit dem Antriebszahnrad mittels einer Welle gekoppelten Antriebsmotor umfasst.

14. Belüftungssystem nach Anspruch 1, wobei die Steuereinheit dazu ausgelegt ist, ein Belüftungsverfahren und eine Belüftungsrate unter Berücksichtigung des Gehalts an flüchtigen organischen Verbindungen der Raumluft zu bestimmen und den Ventilator (200) und die Fenstersteuereinheit (300, 400) entsprechend zu steuern.

15. Belüftungssystem nach Anspruch 14, wobei die Steuereinheit (500) dazu ausgelegt ist, das Fenster (W1, W2) zu schließen, wenn die Raumluft weniger als bis zu einem im Voraus festgelegten höchsten Referenzwert verschmutzt ist.

16. Belüftungssystem nach Anspruch 1, wobei die Steuereinheit (500) dazu ausgelegt ist, das Fenster zu schließen und den Ventilator (200) in Betrieb zu setzen, um den Raum zu belüften, wenn die Außentemperatur außerhalb eines im Voraus festgelegten Bereichs liegt.

17. Belüftungssystem nach Anspruch 1, wobei die Steuereinheit (500) dazu ausgelegt ist, das Belüftungsverfahren und die Belüftungsrate unter Berücksichtigung einer Temperaturdifferenz zwischen dem Raum und der äußeren Umgebung des Raums zu bestimmen, falls die Außentemperatur in einem im Voraus festgelegten Bereich liegt, und den Ventilator (200) und die Fenstersteuereinheit (300, 400) zu steuern.

18. Belüftungssystem nach Anspruch 1 oder 17, wobei die Steuereinheit (500) dazu ausgelegt ist, das Fenster zu öffnen, um den Raum zu belüften, falls die Temperaturdifferenz zwischen dem Raum und der äußeren Umgebung des Raums innerhalb eines im Voraus festgelegten Bereichs liegt.

19. Belüftungssystem nach Anspruch 17, wobei die Steuereinheit (500) dazu ausgelegt ist, das Fenster zu schließen und den Ventilator (200) in Betrieb zu setzen, um den Raum zu belüften, falls die Temperaturdifferenz zwischen dem Raum und der äußeren Umgebung des Raums außerhalb des im Voraus festgelegten Bereichs liegt.

20. Verfahren zum Steuern eines Belüftungssystems, das die folgenden Schritte umfasst:
Messen (S 100) von Zuständen von Raumluft und von Außenluft;
**gekennzeichnet durch**
Bestimmen (S110, S111), ob der Luftverschmutzungsgrad des Raums höher als ein im Voraus festgelegter höchster Referenzwert ist;
eine Außentemperatur innerhalb eines im Voraus festgelegten Bereichs liegt (S 120); und
eine Temperaturdifferenz (S 130) zwischen einem Raum und der äußeren Umgebung innerhalb eines im Voraus festgelegten Bereichs liegt;
Bestimmen eines Belüftungsverfahrens und einer Belüftungsrate in Übereinstimmung mit den bestimmten Luftzuständen; und
Belüften des Raums **durch** automatisches Öffnen/ Schließen (S 112, S 113, S141, S142, S151, S152) wenigstens eines Fensters (W1, W2) und In-Betrieb-Setzen (S 113, S151, S152) eines Ventilators (200) in Übereinstimmung mit einem Bestimmungsergebnis.

21. Verfahren nach Anspruch 20, wobei der Verschmutzungsgrad der Raumluft von einem Gehalt an flüchtigen organischen Verbindungen der Raumluft abhängt.

22. Verfahren nach Anspruch 20, wobei der Schritt des Belüftens des Raums den Schritt (S113) des Schließens des Fensters umfasst, falls der Verschmutzungsgrad der Raumluft innerhalb eines im Voraus festgelegten Bereichs liegt.

23. Verfahren nach Anspruch 20, wobei der Schritt des Belüftens des Raums den Schritt (S112) des Schließens des Fensters und des Anhaltens des Ventilators (200) umfasst, falls der Verschmutzungsgrad der Raumluft niedriger als ein niedrigster Referenzwert ist.

24. Verfahren nach Anspruch 20, wobei der Schritt des Belüftens des Raums den Schritt des Schließens des Fensters und des Betreibens des Ventilators mit einer niedrigen Geschwindigkeit umfasst, falls der Verschmutzungsgrad des Raums höher als ein niedrigster Referenzwert und niedriger als ein höchster Referenzwert ist.

25. Verfahren nach Anspruch 20, wobei der Schritt des Bestimmens eines Belüftungsverfahrens und einer Belüftungsrate ferner den Schritt (S120) des Bestimmens, ob die Außentemperatur innerhalb eines im Voraus festgelegten Bereichs liegt, umfasst, falls der Verschmutzungsgrad der Raumluft höher als ein im Voraus festgelegter Bereich ist.

26. Verfahren nach Anspruch 20, wobei der Schritt des Belüftens des Raums den Schritt (S121) des Schließens des Fensters und des In-Betrieb-Setzens des Ventilators umfasst, falls die Außentemperatur außerhalb eines im Voraus festgelegten Bereichs liegt.

27. Verfahren nach Anspruch 26, wobei der Schritt des Bestimmens eines Belüftungsverfahrens und einer Belüftungsrate ferner den Schritt (S130) des Bestimmens, ob die Temperaturdifferenz zwischen dem Raum und der äußeren Umgebung des Raums innerhalb des im Voraus festgelegten Bereichs liegt, umfasst, falls die Außentemperatur innerhalb des im Voraus festgelegten Bereichs liegt.

28. Verfahren nach Anspruch 27, wobei der Schritt des Belüftens des Raums ferner den Schritt (S 141, S 142) des Öffnens des Fensters und des Anhaltens des Ventilators umfasst, falls die Temperaturdifferenz zwischen dem Raum und der äußeren Umgebung des Raums innerhalb eines im Voraus festgelegten Bereichs liegt.

29. Verfahren nach Anspruch 27, wobei der Schritt des Bestimmens eines Belüftungsverfahrens und einer Belüftungsrate ferner den Schritt (S140) des Bestimmens, ob die relative Feuchtigkeit der äußeren Umgebung innerhalb eines im Voraus festgelegten Bereichs liegt, umfasst, falls die Temperaturdifferenz zwischen dem Raum und der äußeren Umgebung des Raums innerhalb eines im Voraus festgelegten Bereichs liegt.

30. Verfahren nach Anspruch 29, wobei der Schritt des Belüftens des Raums den Schritt (S 142) des maximalen Öffnens des Fensters umfasst, falls die relative Feuchtigkeit der äußeren Umgebung innerhalb eines im Voraus festegelegten Bereichs liegt.

31. Verfahren nach Anspruch 29, wobei der Schritt des Belüftens des Raums den Schritt (S 141) des minimalen Öffnens des Fensters umfasst, falls die relative Feuchtigkeit der äußeren Umgebung außerhalb des im Voraus festegelegten Bereichs liegt.

32. Verfahren nach Anspruch 29, wobei der Schritt des Belüftens des Raums ferner den Schritt (S151, S152) des Schließens des Fensters und des In-Betrieb-Setzens des Ventilators umfasst, falls die Temperaturdifferenz zwischen dem Raum und der äußeren Umgebung des Raums außerhalb des im Voraus festgelegten Bereichs liegt.

33. Verfahren nach Anspruch 32, wobei der Schritt des Bestimmens eines Belüftungsverfahrens und einer Belüftungsrate ferner den Schritt (S150) des Bestimmens, ob die relative Feuchtigkeit des Raums innerhalb eines im Voraus festgelegten Bereichs liegt, umfasst, falls die Temperaturdifferenz zwischen dem Raum und der äußeren Umgebung des Raums außerhalb des im Voraus festegelegten Bereichs liegt.

34. Verfahren nach Anspruch 33, wobei der Schritt des Belüftens des Raums ferner den Schritt (S151) des Schließens des Fensters und des Betreibens des Ventilators (200) mit einer maximalen Geschwindigkeit umfasst, falls die relative Feuchtigkeit des Raums innerhalb des im Voraus festgelegten Bereichs liegt.

35. Verfahren nach Anspruch 33, wobei der Schritt des Belüftens des Raums ferner den Schritt (S152) des Schließens des Fensters und des Betreibens des Ventilators mit einer minimalen Geschwindigkeit umfasst, falls die relative Feuchtigkeit des Raums außerhalb des im Voraus festgelegten Bereichs liegt.

## Revendications

1. Système de ventilation comprenant :
un ventilateur (200) ;
un dispositif de commande de fenêtre (300, 400) prévu pour chaque fenêtre (W1, W2) afin d'ouvrir/fermer la fenêtre (W1, W2) individuellement; et
un dispositif de commande (500) pour commander le ventilateur (200) et le dispositif de commande de fenêtre (300, 400) afin de ventiler la pièce,
**caractérisé par**
un conduit (100) pour mettre en communication une pièce et l'extérieur de la pièce, dans lequel le ventilateur (200) est relié au conduit (100) pour évacuer l'air ambiant à l'extérieur de la pièce, et pour alimenter la pièce en air extérieur par l'intermédiaire du conduit (100) ;
dans lequel le dispositif de commande (500) est adapté pour déterminer si le degré de pollution d'air de la pièce est supérieur à une valeur de référence maximale préréglée ; et si la température extérieure est comprise dans une plage préréglée ; et si la différence de température entre une pièce et l'extérieur est comprise dans une plage préréglée,
dans lequel le dispositif de commande (500) est en outre adapté pour commander le ventilateur (200) et le dispositif de commande de fenêtre (300, 400) en fonction du résultat de la détermination du degré de pollution d'air, de la température extérieure, et de la différence de température.

2. Système de ventilation selon la revendication 1, comprenant en outre un capteur de COV (550) pour mesurer la teneur en composés organiques volatiles dans l'air ambiant.

3. Système de ventilation selon la revendication 1, comprenant en outre des capteurs (510, 520, 530, 540) pour mesurer les conditions de l'air extérieur et de l'air ambiant.

4. Système de ventilation selon la revendication 3, dans lequel les capteurs comprennent :
un capteur de température ambiante (510) pour mesurer la température de l'air ambiant,
un capteur d'humidité ambiante (520) pour mesurer l'humidité de l'air ambiant,
un capteur de température extérieure (530) pour mesurer la température de l'air extérieur, et
un capteur d'humidité extérieure (540) pour mesurer l'humidité de l'air extérieur.

5. Système de ventilation selon la revendication 1, dans lequel le dispositif de commande de fenêtre (300, 400) est adapté pour faire coulisser la fenêtre (W1, W2) latéralement afin d'ouvrir/fermer la fenêtre.

6. Système de ventilation selon la revendication 1, dans lequel le dispositif de commande de fenêtre (300, 400) est adapté pour pousser/tirer la fenêtre (W1, W2) en avant/en arrière afin d'ouvrir/fermer la fenêtre.

7. Système de ventilation selon la revendication 1, dans lequel le dispositif de commande de fenêtre (300, 400) comprend :
une unité de commande (310, 410) pour ouvrir/fermer la fenêtre, et
une unité d'entraînement (320) reliée à l'unité de commande (310) pour générer une force d'entraînement.

8. Système de ventilation selon la revendication 7, dans lequel l'unité de commande (310) comprend :
un boîtier (311) relié à la fenêtre (W1, W2), le boîtier (311) comportant un trou hélicoïdal, et
une vis allongée (312) couplée à l'unité d'entraînement (320) et placée dans le trou hélicoïdal pour déplacer la fenêtre (W1, W2) reliée au boîtier (311) lorsque la vis (312) est mise en rotation par l'unité d'entraînement (320).

9. Système de ventilation selon la revendication 8, dans lequel l'unité d'entraînement (320) comprend un moteur d'entraînement (322) couplé à la vis (312) par un arbre.

10. Système de ventilation selon la revendication 8, dans lequel l'unité d'entraînement (320) comprend :
un train d'engrenages (321) relié à une extrémité de la vis (312), et
un moteur d'entraînement (322) couplé au train d'engrenages (321) par un arbre.

11. Système de ventilation selon la revendication 7, dans lequel l'unité de commande (410) comprend :
une roue menée (411) reliée à la fenêtre (W1, W2), et
une roue d'entraînement (412) reliée à l'unité d'entraînement (410), et en prise avec la roue menée (411), pour être mise en rotation par l'unité d'entraînement (410) afin de faire tourner la roue menée (411), pour ouvrir/fermer la fenêtre.

12. Système de ventilation selon la revendication 11, dans lequel la roue menée (411) est couplé à l'arbre de rotation de la fenêtre par un arbre.

13. Système de ventilation selon la revendication 11, dans lequel l'unité d'entraînement (410) comprend un moteur d'entraînement couplé à la roue d'entraînement par un arbre.

14. Système de ventilation selon la revendication 1, dans lequel le dispositif de commande est adapté pour déterminer un mode de ventilation et une vitesse de ventilation en prenant en compte en la teneur en composés organiques volatiles de l'air ambiant, et pour commander le ventilateur (200) et le dispositif de commande de fenêtre (300,400) en conséquence.

15. Système de ventilation selon la revendication 14, dans lequel le dispositif de commande (500) est adapté pour fermer la fenêtre (W1, W2) lorsque l'air ambiant présente une pollution inférieure à une valeur de référence maximale préréglée.

16. Système de ventilation selon la revendication 1, dans lequel le dispositif de commande (500) est adapté pour fermer la fenêtre, et pour mettre le ventilateur (200) en fonctionnement, afin de ventiler la pièce, si la température extérieure est en dehors d'une plage préréglée.

17. Système de ventilation selon la revendication 1, dans lequel le dispositif de commande (500) est adapté pour déterminer le mode de ventilation et la vitesse de ventilation en prenant en compte la différence de température entre la pièce et l'extérieur de la pièce si la température extérieure est comprise dans une plage préréglée, et pour commander le ventilateur (200) et le dispositif de commande de fenêtre (300, 400).

18. Système de ventilation selon la revendication 1 ou 17, dans lequel le dispositif de commande (500) est adapté pour ouvrir la fenêtre afin de ventiler la pièce si la différence de température entre la pièce et l'extérieur de la pièce est comprise dans une plage préréglée.

19. Système de ventilation selon la revendication 17, dans lequel le dispositif de commande (500) est adapté pour fermer la fenêtre et pour mettre le ventilateur (200) en fonctionnement, afin de ventiler la pièce, si la différence de température entre la pièce et l'extérieur de la pièce est en dehors de la plage préréglée.

20. Procédé de commande d'un système de ventilation, comprenant les étapes consistant à :
mesurer (S100) les conditions de l'air ambiant et de l'air extérieur ;
**caractérisé par** l'étape consistant à :
déterminer (S110, S111) si le degré de pollution d'air de la pièce est supérieur à une valeur de référence maximale préréglée ; et si la température extérieure est comprise dans une plage préréglée (S120) ; si la différence de température (S130) entre une pièce et l'extérieur est comprise dans une plage préréglée ;
déterminer un mode de ventilation et une vitesse de ventilation en fonction des conditions d'air qui ont été déterminées ; et
ventiler la pièce en ouvrant/fermant (S112, S113, S141, S142, S151, S152) au moins une fenêtre (W1, W2) automatiquement, et en mettant en fonctionnement (S113, S151, S152) un ventilateur (200) en fonction d'un résultat de la détermination.

21. Procédé selon la revendication 20, dans lequel le degré de pollution de l'air ambiant dépend de la teneur en composés organiques volatiles de l'air ambiant.

22. Procédé selon la revendication 20, dans lequel l'étape de ventilation de la pièce comprend l'étape (S113) consistant à fermer la fenêtre si le degré de pollution de l'air ambiant est compris dans une plage préréglée.

23. Procédé selon la revendication 20, dans lequel l'étape de ventilation de la pièce comprend l'étape (S112) consistant à fermer la fenêtre et à arrêter le ventilateur (200) si le degré de pollution de l'air ambiant est inférieur à une valeur de référence minimale.

24. Procédé selon la revendication 20, dans lequel l'étape de ventilation de la pièce comprend l'étape consistant à fermer la fenêtre et à faire fonctionner le ventilateur à une vitesse faible si le degré de pollution de l'air ambiant est supérieur à une valeur de référence minimale et inférieur à une valeur de référence maximale.

25. Procédé selon la revendication 20, dans lequel l'étape consistant à déterminer un mode de ventilation et une vitesse de ventilation comprend en outre l'étape (S120) consistant à déterminer si la température extérieure est comprise dans une plage préréglée lorsque le degré de pollution de l'air ambiant est supérieur à une plage préréglée.

26. Procédé selon la revendication 20, dans lequel l'étape de ventilation de la pièce comprend l'étape (S121) consistant à fermer la fenêtre et à mettre le ventilateur en fonctionnement si la température extérieure est en dehors d'une plage préréglée.

27. Procédé selon la revendication 26, dans lequel l'étape consistant à déterminer un mode de ventilation et une vitesse de ventilation comprend en outre l'étape (S130) consistant à déterminer si la différence de température entre la pièce et l'extérieur de la pièce est comprise dans la plage préréglée lorsque la température extérieure est comprise dans la plage préréglée.

28. Procédé selon la revendication 27, dans lequel l'étape de ventilation de la pièce comprend en outre l'étape (S141, S142)) consistant à ouvrir la fenêtre et à arrêter le ventilateur si la différence de température entre la pièce et l'extérieur de la pièce est comprise dans une plage préréglée.

29. Procédé selon la revendication 27, dans lequel l'étape consistant à déterminer un mode de ventilation et une vitesse de ventilation comprend en outre l'étape (S140) consistant à déterminer si l'humidité relative extérieure est comprise dans une plage préréglée lorsque la différence de température entre la pièce et l'extérieur de la pièce est comprise dans une plage préréglée.

30. Procédé selon la revendication 29, dans lequel l'étape de ventilation de la pièce comprend l'étape (S141) consistant à ouvrir la fenêtre au maximum si l'humidité relative extérieure est comprise dans une plage préréglée.

31. Procédé selon la revendication 29, dans lequel l'étape de ventilation de la pièce comprend en outre l'étape (S142) consistant à ouvrir la fenêtre au minimum si l'humidité relative extérieure est en dehors de la plage préréglée.

32. Procédé selon la revendication 29, dans lequel l'étape de ventilation de la pièce comprend en outre l'étape (S151, S152) consistant à fermer la fenêtre et à mettre le ventilateur en fonctionnement si la différence de température entre la pièce et l'extérieur de la pièce est en dehors de la plage préréglée.

33. Procédé selon la revendication 32, dans lequel l'étape consistant à déterminer un mode de ventilation et une vitesse de ventilation comprend en outre l'étape (S150) consistant à déterminer si l'humidité relative ambiante est comprise dans une plage préréglée lorsque la différence de température entre la pièce et l'extérieur de la pièce est en dehors de la plage préréglée.

34. Procédé selon la revendication 33, dans lequel l'étape de ventilation de la pièce comprend en outre l'étape (S151) consistant à fermer la fenêtre et à faire fonctionner le ventilateur (200) à une vitesse maximum si l'humidité relative ambiante est comprise dans la plage préréglée.

35. Procédé selon la revendication 33, dans lequel l'étape de ventilation de la pièce comprend en outre l'étape (S152) consistant à fermer la fenêtre et à faire fonctionner le ventilateur (200) à une vitesse minimum si l'humidité relative ambiante est en dehors de la plage préréglée.
